# EUROPÄISCHE PATENTSCHRIFT

(11) **EP 0 647 497 B1**
(45) Veröffentlichungstag und Bekanntmachung des Hinweises auf die Patenterteilung: **18.06.1997**
(21) Anmeldenummer: 94115659.8
(22) Anmeldetag: 05.10.1994
(51) Int. Cl.: B23K 26/00, B23K 35/30

(54) **Verfahren zum Legieren eines Werkstückes unter Einsatz von Laserstrahlung**
Process for alloying a workpiece, using laser beam
Procédé d'alliage d'une pièce à usiner utilisant le rayonnement laser

(30) Priorität: 08.10.1993 DE 4334409
(43) Veröffentlichungstag der Anmeldung: 12.04.1995
(73) Patentinhaber: Linde Aktiengesellschaft, 65189 Wiesbaden (DE)
(72) Erfinder: Scholz, Jürgen, Dipl.-Ing., D-81379 München (DE); Niederberger, Karl, Dipl.-Ing., D-81549 München (DE); Schiffer, Barbara, Dipl.-Ing., D-80805 München (DE)
(74) Vertreter: Kasseckert, Rainer

(56) Entgegenhaltungen:
- BE-A- 714 641
- H. HÜGEL: "Strahlwerkzeug Laser" 1992 , B.G. TEUBNER , STUTTGART (DE) XP002010027 * Seite 320 - Seite 326 *
- LINDE-BERICHTE AUS TECHNIK UND WISSENSCHAFT, Nr. 65, 1990, Seiten 25-34, XP002010026 WILFRIED LISSACK ET AL.: "Gaseanwendung in der Glasindustrie"

## Beschreibung

Die Erfindung betrifft ein Verfahren zur Bearbeitung eines Werkstückes unter Einsatz von Laserstrahlung, wobei als Legierungselement im wesentlichen Kohlenstoff eingesetzt wird.

Beim Laserstrahllegieren mit Kohlenstoff als Legierungselement sind bislang zwei Möglichkeiten bekannt, wie der Kohlenstoff in die vom Laserstrahl erzeugte Schmelze eingebracht werden kann. Das Werkstück wird vor der Laserstrahlbearbeitung mit Graphit beschichtet oder der Kohlenstoff wird dem Schmelzgut gasförmig zugeführt.

Die Graphitbeschichtung wird zumeist manuell durch Graphitsprays oder durch das Aufbringen graphithaltiger Flüssigkeiten auf die Werkstückoberfläche aufgetragen. Die bekannten Beschichtungen weisen jedoch Nachteile auf. Bei aufgespritzten oder aufgestrichenen Graphitbeschichtungen sind nur mit sehr hohem Aufwand gleichbleibende Schichtdicken zu erzielen. Das Auftragen der Graphitbeschichtungen ist schwer automatisierbar. Darüber hinaus enthalten Spray und Flüssigkeit außer Graphit metallurgisch nicht erwünschte Begleitsubstanzen (beispielsweise die Haftfähigkeit erhöhnde Zusätze), die das Bearbeitungsergebnis nachteilig beeinflussen. Die in Spray und Flüssigkeit enthaltenen Lösungsmittel führen außerdem zu Umweltbelastungen. Des weiteren wirkt sich nachteilig aus, daß sich die Entfernung nicht-bestrahlter Beschichtungen sehr aufwendig gestaltet. In industrieller Anwendung hat sich daher das Beschichten mit Graphit für das Laserstrahllegieren nicht durchsetzen können.

Das Laserstrahlegieren aus der Gasphase macht zunächst einmal eine aufwendige Gasführung erforderlich. Die mit diesem Verfahren einbringbare Menge an Kohlenstoff ist relativ gering. Probleme ergeben sich beim Laserstrahllegieren aufgrund von Verunreinigungen des Gases durch in den Gasstrahl eingewirbelte Luft. Ferner besteht ein Nachteil der Kohlenstoffzufuhr aus der Gasphase darin, daß der Kohlenstoff nicht in reiner Form, sondern als CO₂, C₂H₄ oder ähnlichen organischen Gasen verwendet werden muß. Wasserstoff und Sauerstoff in derartigen Mengen können aber die Qualität der Legierung negativ beeinflussen.

Die oben aufgezählten Verfahren sind beispielsweise bekannt aus
- Laser Treatment of Materials, D. Müller, H.W. Bergmann, T. Endres und T. Heider, Seite 293 bis 298, herausgegeben von B.L. Mordike, DGM Informationsgesellschaft · Verlag , und
- Strahlwerkzeug Laser, Helmut Hügel, Seite 320 bis 326, B.G. Teubner Stuttgart 1992.

Der Erfindung liegt die Aufgabe zugrunde, ein Verfahren der eingangs beschriebenen Art aufzuzeigen, wobei beim Auftrag einer Kohlenstoff-Beschichtung eine gleichbleibende Schichtdicke der Beschichtung und damit ein gleichmäßiges Legieren sichergestellt, gleichzeitig aber die beschriebenen Nachteile der bekannten Verfahren vermieden werden sollen. Insbesondere sollen dabei unerwünschte Bestandteile von der Werkstückoberfläche ferngehalten werden.

Diese Aufgabe wird erfindungsgemäß dadurch gelöst, daß ein organisches, brennbares Gas oder Gasgemisch verbrannt wird, daß durch Anlagerung der bei der Verbrennung erzeugten Kohlenstoff-Partikel die Legierungsbeschichtung auf der Werkstückoberfläche gebildet wird und daß der Kohlenstoff zumindestens teilweise in die vom Laserstrahl erzeugte Schmelze eingebracht und somit das Werkstück an den beschichteten und vom Laser bestrahlten Stellen legiert wird.

Das erfindungsgemäße Beschichtung von Werkstücken mit Kohlenstoff zu einem anderen Zweck ist aus einem nicht verwandten technischen Gebiet bekannt, nämlich aus der Glasindustrie. So wird beispielsweise in "Gaseanwendung in der Glasindustrie", LINDE-Berichte aus Technik und Wissenschaft, Nr. 65, 1990, Seiten 25 bis 34, ein Verfahren zur Beschichtung von Formen für die Hohlglasherstellung beschrieben, um eine rückstandsfreie Trennung von Form und Glas zu erreichen. Das Aufbringen einer Kohlenstoffbeschichtung unter der Bezeichnung CARBOFLAM® basiert auf dem Verbrennen einer Flamme aus Acetylen/Luft oder Acetylen/Sauerstoff. Überraschenderweise hat sich nun gezeigt, daß derartige Kohlenstoffbeschichtungen Vorteile für das Legieren von Werkstücken unter Einsatz von Laserstrahlung mit sich bringen.

Die Durchführung des erfindungsgemäßen Verfahrens führt zum Auftrag einer gleichmäßigen Kohlenstoffschicht auf der zu beschichtenden Werkstückoberfläche. Die Kohlenstoffschicht wird dabei reproduzierbar erzeugt. Zusätzliche Vorteile ergeben sich dadurch, daß sich die Kohlenstoffschicht nach der Laserbearbeitung der Oberfläche des Werkstückes, die nicht mit dem Laser bearbeitet wurden, leicht wieder entfernen läßt. Die erfindungsgemäß aufgetragene Kohlenstoffschicht weist im Vergleich mit herkömmlichen Verfahren sehr geringe Verunreinigungen auf, so daß keine ungewollten Werkstoffveränderungen am Werkstück durch das Beschichtung für das Laserstrahllegieren auftreten. Insbesondere kann beim erfindungsgemäßen Verfahren mit einer flammaufgetragenen Legierungsschicht aus Kohlenstoff-Partikeln auf der Werkstückoberfläche auf den Einsatz von Lösungsmitteln und die Haftung erhöhende Zusätze verzichtet werden.

Mit Vorteil wird die Verbrennungsflamme des Brenngases oder Brenngasgemisches mittels eines Brenners auf die zu beschichtende Oberfläche gerichtet. Dadurch läßt sich eine konstante Schichtdicke der angelagerten Kohlenstoffschicht erzeugen, wobei die Beschichtung unabhängig von Lage und Geometrie des zu bearbeitenden Werkstückes erfolgt. Als Abstand zwischen Brenner und zu beschichtender Oberfläche des Werkstücks hat sich ein Wert zwischen 50 und 500 mm, vorzugsweise 50 bis 200 mm, bewährt.

Vorteilhafterweise wird als organisches, brennbares Gas (Brenngas) Acetylen eingesetzt, gegebenenfalls gemischt mit anderen organischen Brenngasen. Die bei der Verbrennung des organischen Brenngases erzeugten Kohlenstoff-Partikel enthalten außer Kohlenstoff bis zu 1 bis 3 Gew.-% Wasserstoff. Aus der Verbrennung von Acetylen gewonnene Kohlenstoffschichten zeichnen sich durch eine sehr hohe Reinheit aus. Sie bestehen zu über 99 % aus reinem Kohlenstoff. Die durchschnittliche Teilchengröße liegt etwa bei 40 bis 50 nm, wobei die Partikelgröße in etwa von 5 bis 250 nm reicht. Die bei der Verbrennung des organischen Brenngases entstehenden Kohlenstoff-Partikel setzen sich aus einer großen Zahl kleiner Kristalle der Größe 2 bis 3 nm zusammen. Die Kristalle wiederum bestehen aus einer Reihe graphitischer Schichten, (in der Regel 3 bis 5 Schichten), die dann eine annähernde kugelige Form der Partikel bilden.

Die Kohlenstoffschicht wird durch die Flamme, in der sich die Kohlenstoff-Partikel bilden, direkt auf die zu beschichtende Oberfläche des Werkstückes aufgetragen. Die Flamme soll dabei straff, aber nicht turbulent brennen, da bei turbulenten Flammen Umgebungsluft eingewirbelt wird, was die Bildung der Kohlenstoff-Partikel negativ beeinflußt. Die Schichten selbst liegen parallel zueinander. Jede kann 30 Kohlenstoff-Sechserringe enthalten. Im Gegensatz zum Graphit sind die C-Sechserringe unregelmäßig gegeneinander verschoben. Auch die Gitterkonstanten der im erfindungsgemäßen Verfahren entstehenden Kohlenstoffkristalle unterscheiden sich wesentlich von denen für reines Graphit.

Die in einer reinen Acetylenflamme gebildeten Kohlenstoff-Partikel sind schwarz-braun. Damit besteht eine hohe Absorptionsfähigkeit der Beschichtung für die Laserstrahlung. Durch Verwendung eines Brenngasgemisches an Stelle des reinen organischen Brenngases kann die Haftfähigkeit, aber auch die Farbe der Kohlenstoff-Schicht beeinflußt werden. Dabei kann ein Brenngasgemisch verwendet werden, das neben dem organischen Brenngas ein Sauerstoff enthaltendes Gas wie Luft, mit Sauerstoff angereicherte Luft oder reinen Sauerstoff enthält. Ein Brenngasgemisch aus Acetylen und Sauerstoff bildet eine tiefschwarze und gut haftende Kohlenstoffschicht. Geeignet ist dabei ein Brenngasgemisch mit einem Sauerstoffanteil von 1 bis 5 Mol-%. Beim Einsatz eines Brenngasgemisches aus Acetylen und Luft entsteht eine dunkelgraue und gut haftende Kohlenstoffschicht. In Versuchen bewährt hat sich ein Brenngasgemisch, das zwischen 5 und 10 Vol.-% Luft enthält. Bevorzugt wird dabei ein Hüllstrombrenner eingesetzt, bei dem die Acetylenflamme von einem strömenden Luftmantel umhüllt und gestützt wird.

Das erfindungsgemäße Beschichten der zu bearbeitenden Werkstückoberfläche kann räumlich und zeitlich getrennt vom Laserstrahllegieren in einem separaten Arbeitsschritt oder aber unmittelbar vor der Laserbearbeitung in einem integrierten Arbeitsschritt erfolgen. Im letzteren Fall kann ausgenützt werden, daß die Laserstrahlanlage zur Laserbearbeitung üblicherweise CNC-gesteuert (Computerized Numerical Control) ist. Mit Vorteil kann daher die Steuerung des Brenners mit der Steuerung der Laserbearbeitungsanlage gekoppelt werden, wobei die CNC auch die Steuerung des Brenners zur Kohlenstoff-Beschichtung übernimmt.

In Ausgestaltung der Erfindung wird ein an die Kontur des Werkstückes angepaßter Brenner verwendet. Dabei wird insbesondere die Form der Brenneröffnung variiert, beispielsweise durch runde, elliptische oder schlitzförmige Brenneröffnungen. Dadurch wird eine gleichmäßige und vollständige Beschichtung der mit dem Laser zu bearbeiteten Werkstückoberflächen sichergestellt.

Mittels Abdeckungen und Masken kann eine Beschichtung mit einer beliebigen geometrischen Form auf der Werkstückoberfläche erzielt werden. Damit läßt sich erreichen, daß nur die Flächen mit Kohlenstoff beschichtet werden, welche auch anschließend mit dem Laser bearbeitet werden. Da hierbei kein Kohlenstoff auf Werkstückoberflächen angelagert wird, die anschließend nicht mit dem Laser bearbeitet werden, kann eine Nacharbeitung des Werkstückes entfallen, in der die Werkstückoberfläche nach der Laserbearbeitung von der Kohlenstoffbeschichtung gereinigt wird.

Die Erfindung wird im folgenden anhand zweier Figuren näher erläutert.

Hierbei zeigen:
- Fig. 1:: ein vereinfachtes Schema eines Ausführungsbeispieles mit einer erfindungsgemäßen Beschichtung der Werkstückoberfläche und unmittelbar anschließendem Laserstrahllegieren und
- Fig. 2:: ein vereinfachtes Schema zur Integration des Ausführungsbeispiels der erfindungsgemäßen Beschichtung aus Fig. 1 in einer Anlage zur Laserbearbeitung.

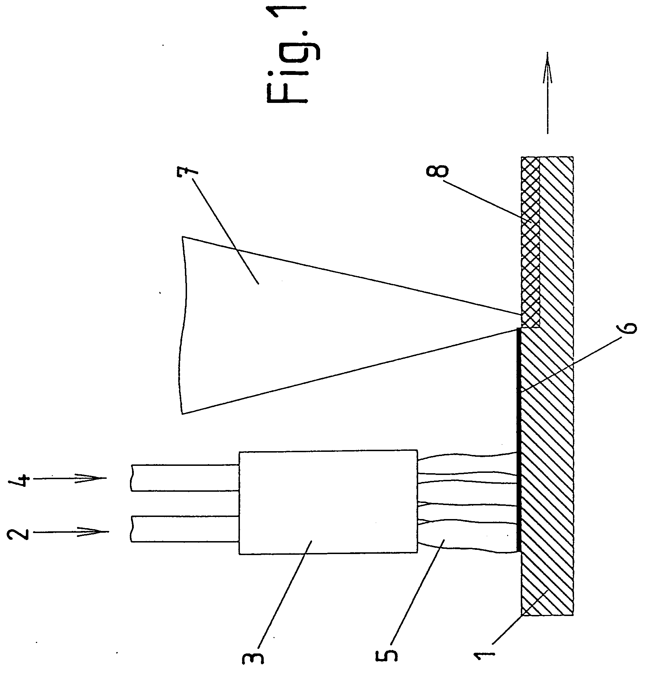

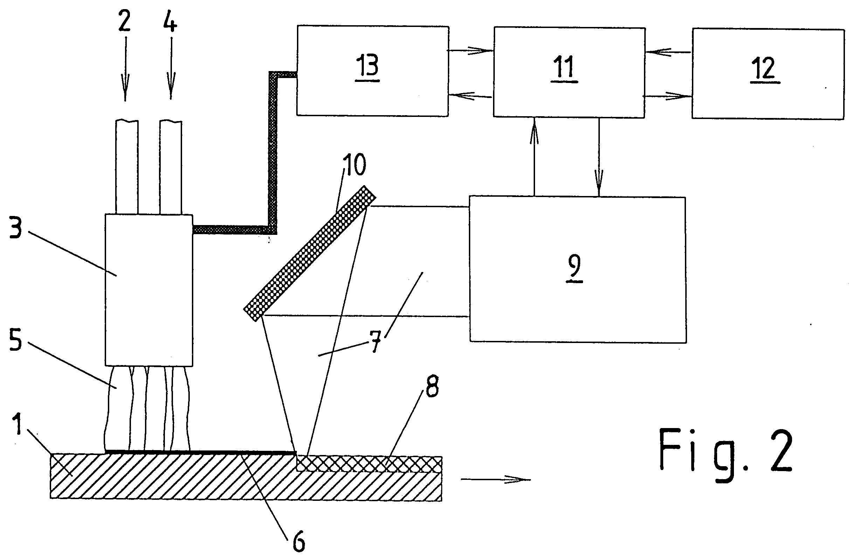

Äquivalente sind in Fig. 1 und Fig. 2 mit gleichen Bezugszeichen versehen.

In Fig. 1 ist ein Werkstück 1 abgebildet, dessen Werkstückoberfläche einer Legierung mit Kohlenstoff unterzogen werden soll. Acetylen 2 wird als Brenngas einem Brenner 3 zugeführt. Gleichzeitig wird als Sauerstoff enthaltendes Gas 4 Sauerstoff oder Luft in den Brenner 3 geleitet. Das so gebildete Brenngasgemisch verbrennt in den Flammen 5, wobei sich Kohlenstoff-Partikel bilden. Diese Kohlenstoff-Partikel werden über die Brennerflammen 5 auf die Werkstückoberfläche getragen und bilden eine Legierungsbeschichtung 6 auf der Werkstückoberfläche. Der fokussierte oder defokussierte Laserstrahl 7 trifft auf die beschichtete Werkstückoberfläche 6, wo ein Großteil seiner Energie aufgrund der Beschichtung 6 absorbiert wird. Dadurch wird das Werkstück im bestrahlten Bereich aufgeschmolzen. Aus dieser Bearbeitung ergibt sich nach der Abkühlung und Verfestigung ein legiertes metallisches Werkstück. Da das Werkstück durch den eingestellten Vorschub entsprechend der gezeigten Pfeilrichtung bewegt wird, resultiert aus der Beschichtung und Laserbestrahlung die bearbeitete und legierte Fläche 8.

Fig. 2 verdeutlicht die Integration der erfindungsgemäßen Beschichtung mit direkt anschließender Bearbeitung durch den Laserstrahl aus Fig. 1 in die Steuerung der Gesamtanlage. Vom Laser 9 wird die Laserstrahlung 7 über eine vereinfacht dargestellte Strahlführung 10 auf die beschichtete Werkstückoberfläche 6 geworfen. Der Laser 9 steht dabei in Wechselwirkung mit der Maschinensteuerung 11, welche wiederum, durch wechselseitige Pfeile symbolisiert, sowohl mit der Bearbeitungsanlage 12, als auch mit der Brennersteuerung 13 zusammenwirkt. Die Brennersteuerung 13 ist direkt mit dem Brenner 3 verbunden.

Sollte es bei der beispielhaft in Fig. 2 dargestellten Integration von Brenner in die Bearbeitungsanlage gewünscht oder erforderlich sein, daß die Kohlenstoff-Partikel bildende Flamme 5 nicht kontinuierlich Kohlenstoff-Partikel erzeugt und auf der Werkstückoberfläche anlagert, kann der Brenner 3 getaktet eingesetzt werden. In den Taktpausen, d.h. wenn die Kohlenstoff-Partikelbildung reduziert werden soll, kann im Brenngasgemisch der Anteil des Brenngases 2 verkleinert oder die Menge des zugegebenen sauerstoffhaltigen Gases 4 vergrößert werden.

## Patentansprüche

1. Verfahren zum Legieren eines Werkstückes unter Einsatz von Laserstrahlung, wobei als Legierungselement im wesentlichen Kohlenstoff eingesetzt wird, **dadurch gekennzeichnet**, daß ein organisches, brennbares Gas oder Gasgemisch verbrannt wird, daß durch Anlagerung der bei der Verbrennung erzeugten Kohlenstoff-Partikel die Legierungsbeschichtung auf der Werkstückoberfläche gebildet wird und daß der Kohlenstoff zumindestens teilweise in die vom Laserstrahl erzeugte Schmelze eingebracht und somit das Werkstück an den beschichteten und vom Laser bestrahlten Stellen legiert wird.

2. Verfahren nach Anspruch 1, dadurch gekennzeichnet, daß die Verbrennungsflamme des Brenngases oder Brenngasgemisches mittels eines Brenners auf die zu beschichtende Oberfläche gerichtet wird.

3. Verfahren nach Anspruch 2, dadurch gekennzeichnet, daß ein Abstand zwischen Brenner und zu beschichtender Werkstückoberfläche zwischen 50 und 500 mm, vorzugsweise zwischen 50 und 200 mm, eingestellt wird.

4. Verfahren nach einem der Ansprüche 1 bis 3, dadurch gekennzeichnet, daß als organisches, brennbares Gas Acetylen und/oder ein anderes organisches Brenngas eingesetzt wird.

5. Verfahren nach einem der Ansprüche 1 bis 4, dadurch gekennzeichnet, daß das Brenngasgemisch neben dem organischen Brenngas ein Sauerstoff enthaltendes Gas wie Luft, mit Sauerstoff angereicherte Luft oder reinen Sauerstoff enthält.

6. Verfahren nach Anspruch 5, dadurch gekennzeichnet, daß das Brenngasgemisch einen Sauerstoffanteil von 1 bis 5 Mol-% enthält.

7. Verfahren nach Anspruch 5, dadurch gekennzeichnet, daß das Brenngasgemisch zwischen 5 und 10 Vol.-% Luft enhält.

8. Verfahren nach einem der Ansprüche 2 bis 7, dadurch gekennzeichnet, daß die Steuerung des Brenners mit der Steuerung der Laserbearbeitungsanlage gekoppelt ist.

9. Verfahren nach einem der Ansprüche 2 bis 8, dadurch gekennzeichnet, daß ein an die Kontur des Werkstückes angepaßter Brenner verwendet wird.

10. Verfahren nach einem der Ansprüche 2 bis 9, dadurch gekennzeichnet, daß mittels Abdeckungen und Masken eine Beschichtung mit einer bestimmten geometrischen Form auf der Werkstückoberfläche erzielt wird.

## Claims

1. Process for alloying a workpiece using laser radiation, wherein carbon is essentially employed as alloying element, characterised in that an organic combustible gas or gas mixture is burnt, in that the alloy coating is formed on the surface of the workpiece through deposition of the carbon particles produced during burning and in that the carbon is at least partially introduced into the melt produced by the laser beam and hence the workpiece is alloyed in the coated and laser-irradiated locations.

2. Process according to claim 1, characterised in that the combustion flame of the combustible gas or combustible gas mixture is directed onto the surface to be coated by means of a burner.

3. Process according to claim 2, characterised in that a gap of between 50 and 500 mm, preferably between 50 and 200 mm, is set between the burner and the surface of the workpiece to be coated.

4. Process according to one of claims 1 to 3, characterised in that acetylene and/or another organic combustible gas is employed as the organic combustible gas.

5. Process according to one of claims 1 to 4, characterised in that in addition to the organic combustible gas, the combustible gas mixture contains a gas containing oxygen such as air, air enriched with oxygen or pure oxygen.

6. Process according to claim 5, characterised in that the combustible gas mixture contains an oxygen level of 1 to 5 mol%.

7. Process according to claim 5, characterised in that the combustible gas mixture contains between 5 and 10% by volume of air.

8. Process according to one of claims 2 to 7, characterised in that the control of the burner is coupled to the control of the laser processing installation.

9. Process according to one of claims 2 to 8, characterised in that a burner matching the contour of the workpiece is used.

10. Process according to one of claims 2 to 9, characterised in that a coating with a defined geometric shape is produced on the surface of the workpiece by means of covers and masks.

## Revendications

1. Procédé de création d'un alliage sur une pièce à traiter, en utilisant du rayonnement laser, dans lequel on introduit comme élément d'alliage essentiellement du carbone, caractérisé en ce que l'on fait brûler un gaz ou un mélange de gaz organiques combustibles, en ce que par dépôt des particules de carbone formées au cours de la combustion, on réalise le revêtement d'alliage sur la surface de la pièce à traiter, et en ce que le carbone est introduit au moins partiellement dans la partie en fusion créée par le rayonnement laser, de telle façon que la pièce à traiter soit munie d'un alliage aux emplacements revêtus et irradiés par le laser.

2. Procédé selon la revendication 1, caractérisé en ce que la flamme de combustion du gaz ou du mélange de gaz combustible est dirigé par un brûleur sur la surface à revêtir.

3. Procédé selon la revendication 2, caractérisé en ce qu'on règle la distance entre le brûleur et la surface revêtue de la pièce à traiter entre 50 et 500 mm, de préférence entre 50 et 200 mm.

4. Procédé selon l'une des revendications 1 à 3, caractérisé en ce qu'on utilise comme gaz combustible organique de l'acétylène et/ou un autre gaz combustible organique.

5. Procédé selon l'une des revendications 1 à 4, caractérisé en ce que le gaz combustible contient à côté du gaz combustible organique un gaz contenant de l'oxygène tel que de l'air, de l'air enrichi en oxygène, ou de l'oxygène pur.

6. Procédé selon la revendication 5, caractérisé en ce que le mélange de gaz combustible contient un pourcentage d'oxygène de 1 à 5 mol.%.

7. Procédé selon la revendication 5, caractérisé en ce que le mélange de gaz combustible contient entre 5 et 10% en volume d'air.

8. Procédé selon l'une des revendications 2 à 7, caractérisé en ce que la commande du brûleur est couplée à la commande de l'installation du rayonnement au laser.

9. Procédé selon l'une des revendications 2 à 8, caractérisé en ce qu'on utilise un brûleur adapté au contour de la pièce à traiter.

10. Procédé selon l'une des revendications 2 à 9, caractérisé en ce que l'on obtient à l'aide de recouvrements et de masques un revêtement qui présente une forme géométrique déterminée, à la surface de la pièce à traiter.
